# EUROPÄISCHE PATENTSCHRIFT

(11) **EP 2 229 430 B1**
(45) Veröffentlichungstag und Bekanntmachung des Hinweises auf die Patenterteilung: **10.04.2019**
(21) Anmeldenummer: 08870561.1
(22) Anmeldetag: 25.11.2008
(51) Int. Cl.: C11C 1/04, C11C 3/12, C10G 3/00

(54) **VERFAHREN ZUR HERSTELLUNG VON KOHLENWASSERSTOFFEN**
METHOD FOR PRODUCING HYDROCARBONS
PROCÉDÉ POUR LA PRODUCTION D'HYDROCARBURES

(30) Priorität: 14.01.2008 DE 102008004406
(43) Veröffentlichungstag der Anmeldung: 22.09.2010
(73) Patentinhaber: Air Liquide Global E&C Solutions Germany GmbH, 60439 Frankfurt am Main (DE)
(72) Erfinder: PALAUSCHEK, Norbert, 65510 Idstein (DE); TRABOLD, Peter, 64295 Darmstadt (DE); HEURICH, Helmut, 61352 Bad Homburg (DE); HOFFMANN, Manfred, 61273 Wehrheim (DE)
(74) Vertreter: Keil & Schaafhausen Patent- und Rechtsanwälte PartGmbB
(86) Internationale Anmeldenummer: PCT/EP2008/009963
(87) Internationale Veröffentlichungsnummer: WO 2009/089866

(56) Entgegenhaltungen:
- EP-A- 1 681 337
- EP-A- 1 728 844
- EP-A2- 2 097 496
- WO-A-2008/093990
- FR-A- 862 678
- FR-A- 873 112
- US-A1- 2007 010 682
- US-A1- 2007 135 663
- HUI Y.H.: "BAILEY'S INDUSTRIAL OIL AND FAT PRODUCTS - EDIBLE OIL AND FAT PRODUCTS : PROCESSING TECHNOLOGY" 1996, JOHN WILEY , XP002519474 Seite 3
- EISENBRAND GERHARD ET AL: "Römpp Lexikon Lebensmittelchemie, Fetthärtung", 1 January 1995 (1995-01-01), RÖMPP LEXIKON LEBENSMITTELCHEMIE, THIEME, STUTTGART ; NEW YORK, PAGE(S) 274, XP001562273, ISBN: 978-3-13-736601-0

## Beschreibung

Die Erfindung betrifft ein Verfahren zur Herstellung von Kohlenwasserstoffen aus in tierischen Fetten oder pflanzlichen Ölen enthaltenen Fettsäureglycerinestern.

Im Zusammenhang mit der Rohölknappheit wird nach alternativen Rohstoffquellen für die Kraftstoffherstellung gesucht. So geht man zunehmend dazu über, aus natürlichen Rohstoffen, wie beispielsweise Rapsöl, Palmöl oder dergleichen, biologische Kraftstoffe zu entwickeln, die den mineralischen Kraftstoffen beigemischt werden. Hierzu werden Glycerinester (Triglyceride), die unter anderem durch Pressung und/oder Extraktion aus Ölfrüchten und Ölsaaten gewonnen werden, in einer katalytischen Hydrierung in gesättigte, weitgehend unverzweigte Kohlenwasserstoffe umgesetzt. Das Glyceringerüst wird bei der Hydrierung zu Propan umgesetzt, so dass kein höherwertiger Wertstoff gewonnen werden kann. Außerdem werden Doppelbindungen durch Wasserstoff abgesättigt. Die Carboxylgruppen werden dabei ebenfalls durch Wasserstoff abgesättigt. Da die Rohester Verunreinigungen enthalten, die die Hydrierung stören, ist abhängig von dem verwendeten Rohstoff und Katalysator eine aufwändige Reinigung notwendig.

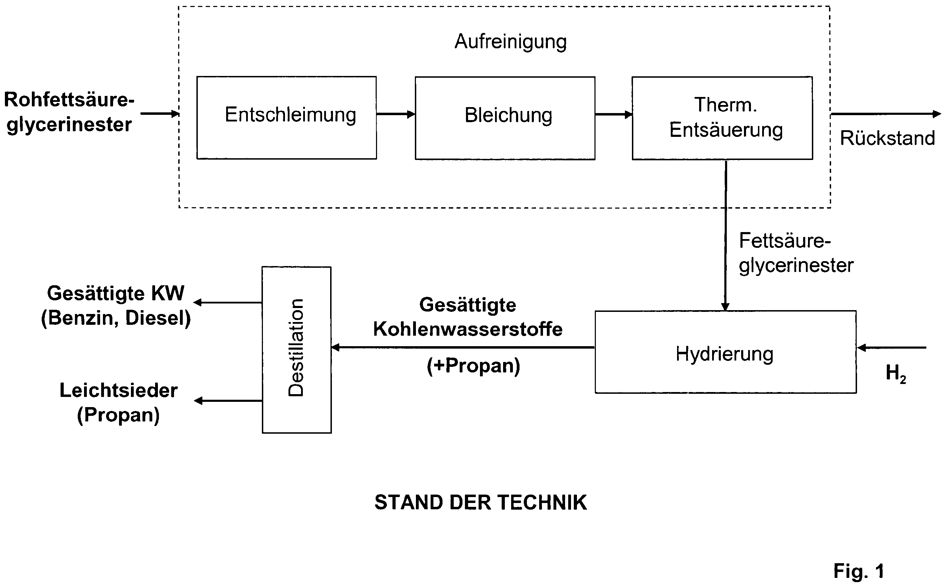

In Fig. 1 ist schematisch ein derartiges bekanntes Verfahren dargestellt. Die Rohfettsäureglycerinester werden in einem mehrstufigen Prozess aufgereinigt, wobei durch Entschleimen Metalle und Phosphatide bis zu einem Anteil von < 20 ppm Phosphatiden entfernt werden. In der anschließenden Bleichung kann der Anteil der Phosphatide auf bis zu 5 ppm verringert werden. Durch thermische Entsäuerung werden schließlich freie Fettsäuren entfernt. Die erhaltenen Fettsäureglycerinester werden anschließend unter Zugabe von Wasserstoff hydriert, wobei sich ein Gemisch aus gesättigten Kohlenwasserstoffen und Propan ergibt, das destillativ getrennt wird. Die höhermolekularen Kohlenwasserstoffe können dann weiter veredelt beziehungsweise direkt den Kraftstoffen beigemischt werden. Die Weiterreinigung des Propans lohnt sich nur in Ausnahmefällen, es kann daher allenfalls als Heizgas thermisch genutzt werden. Insgesamt ergibt sich eine wirtschaftlich nicht zufriedenstellende Ausbeute, da zumeist der Wert der erhaltenen gesättigten Kohlenwasserstoffe niedriger liegt als der Wert der Einsatzstoffe.

Ein ähnliches Verfahren ist aus der EP 1 728 844 A1 bekannt, wobei aus biologischen Einsatzstoffen, wie Mais-, Raps-, Soja- oder Palmöl, durch Vorbehandlung mit Hilfe eines acidischen lonentauscherharzes ein Teil der Verunreinigungen entfernt und ein erster Strom erzeugt wird, der anschließend hydriert wird, um ein Reaktionsprodukt mit einer Kohlenwasserstofffraktion zu erhalten, die als Diesel nutzbare n-Paraffine aufweist.

Auch aus dem US-Patent 4,992,605 ist ein Verfahren zur Herstellung von höherwertigen Kohlenwasserstoffen zur Beimischung zu Dieselkraftstoff bekannt, wobei pflanzliche Öle katalytisch hydriert werden, um die Einsatzstoffe in höherkettige unverzweigte Paraffine umzuwandeln.

Auch diesen Verfahren ist jedoch gemeinsam, dass die pflanzlichen Öle vor der Hydrierung einer aufwändigen Vorreinigung unterzogen werden müssen, da der Katalysator der nachfolgenden Hydrierung gegenüber Verunreinigungen anfällig ist. Eine schwankende Qualität der Reinigung kann hierbei eine verminderte Aktivität des Katalysators, geringere Verfügbarkeit der Produktionsanlage und daher höhere Kosten mit sich bringen. Durch die Reinigung gehen zudem teilweise Rohester der Einsatzstoffe verloren, so dass die Effizienz des Verfahrens leidet. Das Glyceringerüst wird zu Propan hydriert, das aufgrund seines geringen Wertes allenfalls thermisch genutzt werden kann. Zudem ist mit der Hydrierung des Glyceringerüstes ein höherer Wasserstoffverbrauch verbunden, wodurch sich die Betriebskosten erhöhen. Minderwertige Fette können nicht eingesetzt werden, um den Katalysator bei der Hydrierung nicht zu beschädigen.

Die US 2007/0135663 A1 beschreibt ein Verfahren zur Herstellung von Ölen, die die Grundlage für Schmierstoffe bilden. Dazu wird zuerst ein Pflanzenöl hydrolysiert, die in den langkettigen Resten der Fettsäuren enthalten sind, gesättigt werden. Anschließend wird die Stearinsäure mit Biodiesel gemischt und das Gemisch ketonisiert. Das entstandene Keton wird zum linearen C₃₅-Paraffin hydriert. Unter Wasserstoff erfolgt anschließend eine Isomerisierung. Als abschließender Reinigungsschritt ist eine Filtration des isomerisierten Paraffins vorgesehen.

Die FR 862 678 beschreibt ein Verfahren, in dem Öle oder Fette durch Erhitzen in inerter Atmosphäre in Anwesenheit eines flüssigen Metallbades, welches als Katalysator fungiert, zu Kohlenwasserstoffen gecrackt werden. Hierbei kann beispielsweise ein solcher Prozess in einem flüssigen Bleibad auch dann erfolgreich verlaufen, wenn als Edukt Fettsäuren verwendet werden. Diese Fettsäuren werden dahingehend charakterisiert, dass sie aus der Hydrolyse von Erdnussöl stammen. Eine Hydrierung der Fettsäuren ist nicht vorgesehen.

Die FR 873 112 lehrt eine Hydrierung von Fettsäuren in Gegenwart eines Hydrierkatalysators zur Herstellung von Treibstoff aus Pflanzenfett. Dabei werden zunächst die Fettmoleküle durch Hydrolyse in Glycerin und Fettsäure getrennt.

Anschließend werden diese Fettsäuren mit einem Katalysator in Kontakt gebracht und erwärmt und dabei Kohlenstoffoxide, Wasserstoff und Methan abgespalten. Die so aus den Fettsäuren entstandenen Kohlenwasserstoffe können als Treibstoff genutzt werden. Als Katalysator werden Metallchloridderivate verwendet.

In der XP-002519474 ist ein Diagramm für ein Verfahren zur Herstellung von Speiseölen oder Margarine gezeigt. Dabei werden nach der Vorbereitung des Rohstoffes und der Extraktion erhaltende Phosphatide aus dem Rohöl mit Wasser ausgewaschen und zu Lecithin weiterverarbeitet.

Dann erfolgt eine Absättigung von Doppelbindungen mit Wasserstoff in den Fettsäureketten der Triglyceridmoleküle, wobei Triglyceridmoleküle erhalten bleiben.

Die EP 1 681 337 A1 beschreibt schließlich ein Verfahren zur Herstellung von Kohlewasserstoffen aus pflanzlichen oder tierischen Fetten, die zur Beimischung zu Diesel-Treibstoff geeignet sind. Dazu wird ein Edukt, welches aus einem nachwachsenden Rohstoff gewonnen wird und Fettsäuren und/oder Fettsäurederivate enthält, mit einem heterogenen Katalysator aus der Gruppe 8 in Kontakt gebracht. Dabei liegt das Metall aus der Gruppe 8 entweder metallisch, als Metalloxid, als mesoporöses Material, aus kohlenstoffhaltigen Trägern oder auf einem strukturierten Katalysatorträger aufgebracht vor. Mittels dieses Katalysators wird dann eine Decarboxylierungs- / Decarbonyliserungsreaktion bei Temperatur von 200 bis 400 °C und einem Druck von 0,1 bis 15 MPa durchgeführt. Dabei wird Sauerstoff in Form von CO und CO₂ aus dem Fettmolekül abgespalten und damit das Fett in Kohlenwasserstoff umgewandelt. Um die Wirksamkeit des Katalysators aufrecht zu halten, wird der Rohstoff Wasserstoff beigemischt.

US 2007/010 682 A1 beschreibt ein Verfahren zur Herstellung von Kohlenwasserstoffen aus einem mindestens 5 Gew.-% freie Fettsäuren enthaltenden Eduktstrom. Der Eduktstrom wird mit einem Verdünner gemischt und bei einer Temperatur von 200 bis 400 °C an einem Katalysator mit erhöhtem Schwefelgehalt katalytisch hydriert.

Die EP 2 097 496 A2 beschreibt ein Verfahren zur direkten Umwandlung von lipidischer Biomasse in einen Brennstoff für Fahrzeuge, wobei dieses Verfahren drei Schritte umfasst. In einem Schritt (A) erfolgt eine thermischen Hydrolyse an einer lipidischen Biomasse, um einen Produktstrom zu bilden, der eine freie Fettsäure umfasst, und einen Nebenproduktstrom zu bilden, der Glycerin umfasst. Im zweiten Schritt (B) schließt sich eine katalytische Desoxygenierung des freien Fettsäurestroms durch einen Decarboxylierungsreaktionsweg und/oder einen Decarbonylierungsreaktionsweg an, um einen Produktstrom zu bilden, der ein n-Alkan umfasst. Schließlich folgen in Schritt (C) Durchführen eines oder mehrerer Reformierungsschritte am n-Alkanstrom, um einen Produktstrom zu bilden, der ein Gemisch von Kohlenwasserstoffverbindungen, ausgewählt aus der Gruppe bestehend aus n-Alkanen, Isoalkanen, Aromaten und Cycloalkanen, umfasst.

Aufgabe der Erfindung ist es daher, die oben genannten Nachteile zu vermeiden und ein wirtschaftlicheres Verfahren zur Herstellung von Kraftstoffen aus biologischen Einsatzstoffen bereitzustellen.

Diese Aufgabe wird mit den Merkmalen des Anspruchs 1 gelöst. Im Wesentlichen werden die Fettsäureglycerinester ohne Aufbereitung direkt einer hydrolytischen Spaltung unterzogen und in einen ersten, Glycerin und Wasser enthaltenden Strom und einen zweiten, freie Fettsäuren enthaltenden Strom aufgespalten werden. Dieser Schritt ermöglicht den Einsatz verunreinigter und daher preiswerterer Einsatzstoffe. Die freien Fettsäuren des zweiten Stroms werden dann mit Wasserstoff zu gesättigten Kohlenwasserstoffen hydriert. Durch den Verzicht auf die beim Stand der Technik erforderliche Vorreinigung ergibt sich eine wesentliche Kosteneinsparung. Das Glycerin wird direkt nach der hydrolytischen Spaltung abgezogen, so dass er die Hydrierungsstufe nicht mehr durchläuft. Lediglich die freien Fettsäuren werden hydriert, so dass sich durch das Abziehen des Glycerins aus dem Einsatzstrom ein geringerer Wasserstoffverbrauch für die Hydrierung ergibt.

Die üblichen Grundstoffe für die Herstellung von Biodiesel aus Rapsöl, Palmöl oder dergleichen sind Triglyceride, die durch die Hydrolyse in Glycerin und freie Fettsäuren aufgespalten werden.

Die Trennung der Fettsäuren von dem Glycerin nach der Hydrolyse erfolgt erfindungsgemäß durch Flüssig-Flüssig-Phasentrennung.

Der erste, Glycerin und Wasser enthaltende Strom wird in Weiterbildung der Erfindung anschließend bis zu einer Glycerinkonzentration von > 80 Gew.-%, vorzugsweise etwa 88 Gew.-% eingedampft. Das bei der Eindampfung gewonnene Wasser kann dann zu der Hydrolyse zurückgeführt werden, wodurch sich die Zufuhr des für die Hydrolyse erforderlichen Spaltwassers entsprechend verringert. Das gewonnene Glycerin kann so, ohne weitere Aufarbeitung, als Wertstoff genutzt werden.

Ist das Glycerin für eine Verwendung in der Pharmaindustrie gedacht, so kann es durch Destillation auf eine Konzentration von > 95 Gew.-%, vorzugweise bis auf 99,8 Gew.-% aufgereinigt und anschließend mit Aktivkohle gebleicht werden. Dies steigert den Verkaufswert des Glycerins erheblich.

Der zweite in der Hydrolyse erhaltene Strom wird, falls erforderlich, vor der Hydrierung vorzugsweise durch Destillation oder Rektifikation in einen dritten, im Wesentlichen die Fettsäuren enthaltenden Strom und einen vierten, Verunreinigungen enthaltenden Strom aufgetrennt. Der Hydrierung wird somit ein im Wesentlichen reiner Strom freier Fettsäuren zugeführt, um den für die Hydrierung vorgesehenen Katalysator zu schonen. Der schwere Destillationsrückstand, der die Verunreinigungen enthält, wird erfindungsgemäß ausgeschleust beziehungsweise zur Erhöhung der Ausbeute teilweise in die Hydrolyse zurückgeführt.

Die gereinigten Fettsäuren werden mit Wasserstoff in Gegenwart eines üblichen Hydrierkatalysators, zu gesättigten Kohlenwasserstoffen, insbesondere n-Paraffinen, hydriert.

Je nach Einsatzzweck der gewonnenen gesättigten Kohlenwasserstoffe können diese wenigstens teilweise zu Isoparaffinen isomerisiert werden. Die n-Paraffine finden aber auch ohne weitere Umsetzung Anwendung in speziellen Bereichen. Die gesättigten Kohlenwasserstoffe werden anschließend vorzugsweise als Zusatzstoffe bei der Benzin- oder Dieselproduktion verwendet.

Die zur Durchführung des oben beschriebenen Verfahrens geeignete Anlage umfasst einen Hydrolysereaktor, in dem die Fettsäureglycerinester mit Wasser in einen ersten, Glycerin und Wasser enthaltenden Strom und einen zweiten, freie Fettsäuren enthaltenden Strom aufgespalten werden, und einen Hydrierreaktor, in dem die Fettsäuren mit Wasserstoff zu gesättigten Kohlenwasserstoffen hydriert werden.

Im Anschluss an den Hydrolysereaktor ist eine Eindampfanlage zur Trennung des Glycerins, von Wasser vorgesehen. Über eine Rückführleitung kann das so gewonnene Wasser in den Hydrolysereaktor zurückgeführt werden.

Der Reinheitsgrad des Glycerins wird erfindungsgemäß in einer ersten Destillationsstufe bis auf über 99 Gew.-% erhöht, so dass es in der Pharmaindustrie Verwendung finden kann.

Zwischen dem Hydrolysereaktor und dem Hydrierreaktor ist eine zweite Destillationsvorrichtung vorgesehen, in welcher der zweite Strom in einen dritten, im Wesentlichen die Fettsäuren enthaltenden Strom und einen vierten, Verunreinigungen enthaltenden Strom aufgetrennt wird.

Die zweite Destillationsvorrichtung ist über eine Rückführleitung mit dem Hydrolysereaktor verbunden, um den die Verunreinigungen aber auch noch nicht umgesetzte Fettsäureester enthaltenden vierten Strom zur Erhöhung der Ausbeute teilweise zu dem Hydrolysereaktor zurückzuführen.

Im Anschluss an den Hydrolysereaktor ist eine Isomerisierungsanlage vorgesehen, in welcher wenigstens ein Teil der durch die Hydrierung entstandenen n-Paraffine isomerisiert wird, da bei manchen Anwendungsfällen auch verzweigte Kohlenwasserstoffe benötigt werden.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: schematisch eine Anlage zur Herstellung von gesättigten Kohlenwasserstoffen nach dem Stand der Technik,
- Fig. 2: schematisch eine Anlage zur Durchführung des Verfahrens gemäß der Erfindung und
- Fig. 3: schematisch eine zweite Anlage zur Durchführung des Verfahrens gemäß der Erfindung.

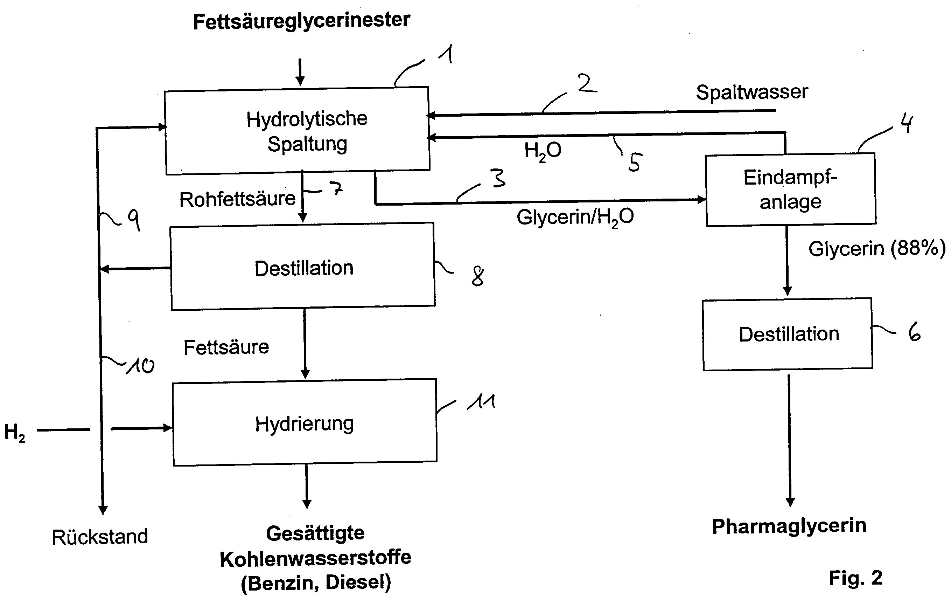

In Fig. 2 ist eine erste Anlage zur Herstellung von gesättigten Kohlenwasserstoffen aus natürlichen Rohstoffen, wie aus Fettsäureglycerinestern bestehendes Palmöl, Rapsöl, Talg, Altfette oder dergleichen dargestellt.

Die Fettsäureglycerinester werden ohne vorherige Reinigung in einem Hydrolysereaktor 1 einer hydrolytischen Spaltung unterzogen. Die Hydrolyse erfolgt mit Hilfe von Spaltwasser , das über eine Wasserleitung 2 beispielsweise mit einem Druck von 65 bar und einer Temperatur von etwa 250 °C in den Hydrolysereaktor 1 eingebracht wird. Anstelle des Spaltwassers kann auch Wasserdampf oder ein Gemisch flüssigen und dampfförmigen Wassers für die Hydrolyse verwendet werden. Die Fettsäureglycerinester werden vorzugsweise zu mehr als 98%, insbesondere sogar mehr als 99% aufgespalten und durch Flüssig-Flüssig-Phasentrennung in einen ersten Strom, der Glycerin und Wasser enthält, und einen zweiten Strom, der freie Fettsäuren und Verunreinigungen enthält, aufgetrennt.

Das Glycerin und das Wasser werden über eine Leitung 3 einer Eindampfanlage 4 zugeführt, in welcher der erste Strom, der etwa 12 bis 32 % Glycerin enthält, bis zu einer Glycerin-Konzentration von etwa 88 Gew.-% eingedampft wird. Das hierbei gewonnene Wasser wird über eine Rückführleitung 5 zu dem Hydrolysereaktor 1 zurückgeführt und unterstützt die Hydrolyse, so dass die Menge des über die Wasserleitung 2 zugeführten Spaltwassers entsprechend reduziert werden kann.

Bei einer bevorzugten Ausgestaltung der Erfindung wird das in der Eindampfanlage 4 gewonnene Glycerin in einer ersten Destillationsvorrichtung 6 bis zu einer Konzentration von > 99 Gew.% aufgereinigt und anschließend mit Aktivkohle gebleicht, so dass es als Pharmaglycerin Verwendung finden kann.

Der aus dem Hydrolysereaktor 1 über eine Leitung 7 austretende zweite, freie Rohfettsäuren enthaltende Strom wird, falls erforderlich, in einer zweiten Destillationsvorrichtung 8 weitgehend von Verunreinigungen getrennt und in einen dritten, im Wesentlichen die Fettsäuren enthaltenden Strom und einen vierten, im Wesentlichen die Verunreinigungen enthaltenden Strom aufgetrennt. Der vierte Strom kann über eine Rückführleitung 9 in den Hydrolysereaktor 1 zurückgeführt werden, um die Ausbeute zu erhöhen. Wenigstens ein Teil des vierten Stroms wird über eine Abfuhrleitung 10 abgeführt.

Der aus der zweiten Destillationsvorrichtung 8 austretende, die freien Fettsäuren enthaltende dritte Strom wird einem ggf. mehrstufigen Hydrierreaktor 11 zugeführt, in welchem die freien Fettsäuren durch Zugabe eines geeigneten Hydriermittels, insbesondere von Wasserstoff (H₂), in Gegenwart eines kommerziell erhältlichen Hydrierkatalysators, beispielsweise eines Kobalt-, Palladium- oder Platinkatalysators auf einem Aluminium- oder Siliziumoxidträger, zu langkettigen gesättigten Kohlenwasserstoffen (n-Paraffinen) hydriert, die dann als Benzin- oder Dieselkraftstoffe genutzt oder diesen beigemischt werden können. Je nach Anwendungsfall werden diese gesättigten Kohlenwasserstoffe in einem Folgeschritt nicht, teilweise oder vollständig isomerisiert.

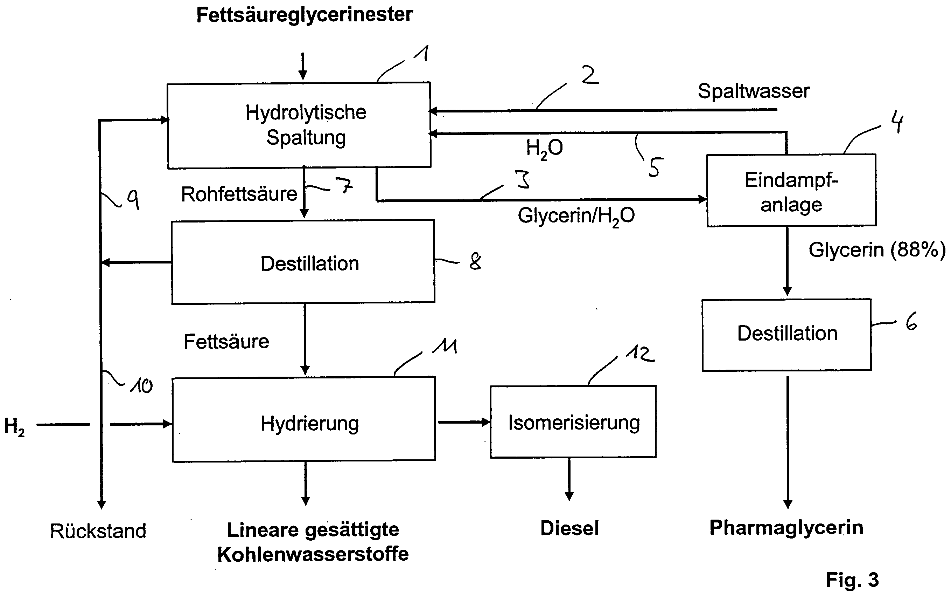

Bei der in Fig. 3 gezeigten abgewandelten Ausführungsform ist im Anschluss an den Hydrierreaktor 11 eine Isomerisierungsanlage 12 vorgesehen, der wenigstens ein Teil der durch die Hydrierung erhaltenen unverzweigten gesättigten Kohlenwasserstoffe zugeführt wird, um durch Isomerisierung verzweigte gesättigte Kohlenwasserstoffe (Isoparaffine) zu erhalten, die insbesondere in Dieselkraftstoffen verwendet werden können. Die übrigen, linearen gesättigten Kohlenwasserstoffe können anderen geeigneten Verwendungen zugeführt werden.

Mit der Erfindung wird somit ein wirtschaftliches Verfahren zur Herstellung von gesättigten Kohlenwasserstoffen als Kraftstoff vorgeschlagen. Im Gegensatz zum Stand der Technik ist eine aufwändige Vorreinigung vor dem Hydrierreaktor 11 nicht erforderlich. Das Glycerin wird durch hydrolytische Spaltung abgetrennt und kann als Wertstoff genutzt werden. Da bei der Erfindung keine Hydrierung des Glycerins erfolgt, kann die Menge des dem Hydrierreaktor 11 zugeführten Wasserstoffs deutlich verringert werden.

Als Einsatzstoffe für die erfindungsgemäße Anlage eignen sich die herkömmlicherweise für biologische Kraftstoffe verwendeten Ölfrüchte und Ölsaaten aber auch tierische Fette und Altfette. Dadurch kann der Anwendungsbereich der Erfindung weiter erhöht werden.

### Beispiel

Um die Wirtschaftlichkeit des erfindungsgemäßen Verfahrens zu illustrieren, wurden in einer Beispielrechung 250 kt/a Fettsäureglycerinester in den Hydrolysereaktor 1 eingebracht. Nach Abspaltung und Eindampfung des Glycerins wurden 28 bis 34 kt/a Glycerin (abhängig vom Einsatzstoff) einer Konzentration von 88 Gew.% erhalten.

Dem Hydrierreaktor 11 wurden 226 kt/a Fettsäure zugeführt, wobei sich gegenüber dem Stand der Technik eine Ersparnis an dem Hydrierreaktor zuzuführendem Wasserstoff in Höhe von bis zu 30 % ergab.

### Bezugszeichenliste

- 1: Hydrolysereaktor
- 2: Wasserleitung
- 3: Leitung
- 4: Eindampfanlage
- 5: Rückführleitung
- 6: erste Destillationsvorrichtung
- 7: Leitung
- 8: zweite Destillationsvorrichtung
- 9: Rückführleitung
- 10: Abfuhrleitung
- 11: Hydrierreaktor
- 12: Isomerisierungsanlage

## Patentansprüche

1. Verfahren zur Herstellung von Kohlenwasserstoffen aus in Fetten oder fetten Ölen enthaltenen Fettsäureglycerinestern,
wobei die Fettsäureglycerinester durch hydrolytische Spaltung in einen ersten, Glycerin und Wasser enthaltenden Strom und einen zweiten, freie Fettsäuren enthaltenden Strom aufgespalten werden,
wobei die Trennung in ersten und zweiten Strom durch Flüssig-Flüssig-Phasentrennung erfolgt und
wobei die freien Fettsäuren des zweiten Stroms mit einem geeigneten Hydriermittel zu gesättigten Kohlenwasserstoffen hydriert werden., **dadurch gekennzeichnet, dass** der erste Strom bis zu einer Glycerinkonzentration von > 80 Gew.-%, vorzugsweise 85 bis 90 Gew.-%, eingedampft wird.

2. Verfahren nach Anspruch 1, **dadurch gekennzeichnet, dass** das bei der Eindampfung gewonnene Wasser zu der Hydrolyse zurückgeführt wird.

3. Verfahren nach Anspruch 1 oder 2, **dadurch gekennzeichnet, dass** das Glycerin durch Destillation auf eine Konzentration > von 95 Gew.-%, vorzugsweise > 99 Gew.-%, aufgereinigt wird.

4. Verfahren nach einem der vorhergehenden Ansprüche, **dadurch gekennzeichnet, dass** der zweite Strom vor der Hydrierung in einen dritten, im Wesentlichen die Fettsäuren enthaltenden Strom und einen vierten, Verunreinigungen enthaltenden Strom aufgetrennt wird, wobei die Trennung in dritten und vierten Strom vorzugsweise durch Destillation oder Rektifikation erfolgt, wobei der dritte Strom vorzugsweise mit Wasserstoff zu gesättigten Kohlenwasserstoffen, insbesondere Paraffinen, hydriert wird, und wobei der Verunreinigungen enthaltende vierte Strom vorzugsweise teilweise zu dem Hydrolysereaktor zurückgeführt wird.

5. Verfahren nach einem der vorhergehenden Ansprüche, **dadurch gekennzeichnet, dass** die Hydrierung in Gegenwart eines Hydrierkatalysators erfolgt.

6. Verfahren nach einem der vorhergehenden Ansprüche, **dadurch gekennzeichnet, dass** die gesättigten Kohlenwasserstoffe wenigstens teilweise zu Isoparaffinen isomerisiert werden.

7. Verfahren nach einem der vorhergehenden Ansprüche, **dadurch gekennzeichnet, dass** die gesättigten Kohlenwasserstoffe als Zusatzstoffe bei der Benzin- oder Dieselproduktion verwendet werden.

## Claims

1. A process for producing hydrocarbons from fatty acid esters contained in fats or fat oils,
wherein the fatty acid esters are split up by hydrolytic decomposition into a first stream containing glycerol and water and a second stream containing free fatty acids, and
wherein the free fatty acids of the second stream are hydrogenated with a suitable hydrogenating agent to obtain saturated hydrocarbons.
wherein the separation into a first stream and a second stream is effected by liquid-liquid phase separation
**characterized in that** the first stream is evaporated to a glycerol concentration of >80 wt-%, preferably 85 to 90 wt.-%.

2. The process according to claim 1, **characterized in that** the water obtained during evaporation is recirculated to the hydrolysis.

3. The process according to claim 1 or 2, **characterized in that** the glycerol is cleaned up by distillation to a concentration of >95 wt-%, preferably 99 wt.-%.

4. The process according to any of the preceedings claims, **characterized in that** before hydrogenation the second stream is separated into a third stream containing the fatty acids and a fourth stream containing impurities, wherein the separation into the third and fourth streams is preferably effected by distillation or rectification, wherein the third stream is preferably hydrogenated with hydrogen to obtain saturated hydrocarbons, particularly olefines, and wherein the fourth stream containing impurities is preferably partly recirculated to the hydrolysis reactor.

5. The process according to any of the preceedings claims, **characterized in that** the hydrogenation is effected in the presence of a hydrogenation catalyst.

6. The process according to any of the preceedings claims, **characterized in that** the saturated hydrocarbons are at least partly isomerized to isoparaffins.

7. The process according to any of the preceedings claims **characterized in that** the saturated hydrocarbons are used as additives in the gasoline or diesel production.

## Revendications

1. Procédé, destiné à la production d'hydrocarbures à partir d'esters de glycérol d'acide gras contenus dans des graisses ou des huiles grasses,
lors duquel on scinde des esters de glycérol d'acide gras par scission hydrolytique en un premier flux contenant de la glycérine et de l'eau et en un deuxième flux contenant des acides gras libres,
la scission dans le premier et le deuxième flux s'effectuant par séparation de phase liquide/liquide et
lors duquel les acides gras libres du deuxième flux sont hydrogénés à l'aide d'un agent d'hydrogénation adaptés en hydrocarbures saturés, **caractérisé en ce qu'**on fait évaporer le premier flux jusqu'à l'atteinte d'une concentration de glycérine de > 80 % en poids, de préférence de 85 à 90 % en poids.

2. Procédé selon la revendication 1, **caractérisé en ce qu'**on ramène vers l'hydrolyse l'eau récupérée lors de l'évaporation.

3. Procédé selon la revendication 1 ou 2, **caractérisé en ce qu'**on purifie la glycérine par distillation à une concentration > à 95 % en poids, de préférence > 99 % en poids.

4. Procédé selon l'une quelconque des revendications précédentes, **caractérisé en ce qu'**avant l'hydrogénation, on sépare le deuxième flux en un troisième flux contenant principalement les acides gras et en un quatrième flux contenant des impuretés, la séparation dans le troisième et dans le quatrième flux s'effectuant de préférence par distillation ou par rectification, le troisième flux étant hydrogéné de préférence à l'aide d'hydrogène en hydrocarbures saturés, notamment en paraffines et le quatrième flux contenant des impuretés étant de préférence ramené en partie vers le réacteur d'hydrolyse.

5. Procédé selon l'une quelconque des revendications précédentes, **caractérisé en ce que** l'hydrogénation s'effectue en présence d'un catalyseur d'hydrogénation.

6. Procédé selon l'une quelconque des revendications précédentes, **caractérisé en ce qu'**on isomérise au moins partiellement les hydrocarbures saturés en isoparaffines.

7. Procédé selon l'une quelconque des revendications précédentes, **caractérisé en ce qu'**on utilise les hydrocarbures saturés comme additifs lors de la production d'essence ou de diesel.
